# EUROPÄISCHE PATENTSCHRIFT

(11) **EP 3 175 066 B1**
(45) Veröffentlichungstag und Bekanntmachung des Hinweises auf die Patenterteilung: **21.10.2020**
(21) Anmeldenummer: 15756339.6
(22) Anmeldetag: 22.07.2015
(51) Int. Cl.: E05D 15/06, F16C 29/04, F16C 13/00, B60J 7/06, B60J 5/06, F16C 19/18

(54) **ROLLE**
PULLEY
ROULEAU

(30) Priorität: 01.08.2014 DE 202014006133 U
(43) Veröffentlichungstag der Anmeldung: 07.06.2017
(73) Patentinhaber: European Trailer Systems GmbH, 47441 Moers (DE)
(72) Erfinder: REMMEL, Roger, 42897 Remscheid (DE)
(74) Vertreter: Sparing, Rolf Klaus
(86) Internationale Anmeldenummer: PCT/DE2015/000364
(87) Internationale Veröffentlichungsnummer: WO 2016/015699

(56) Entgegenhaltungen:
- DE-A1- 4 415 756
- DE-A1-102011 051 438
- DE-U1- 29 807 224
- GB-A- 2 268 146
- GB-A- 2 285 427
- US-A- 2 075 280
- US-A- 3 528 645
- US-A- 3 714 838
- US-A- 4 925 322
- US-A- 5 775 819
- US-A1- 2005 173 688
- US-B1- 6 435 725

## Beschreibung

Die Erfindung betrifft eine Rolle, insbesondere eine Tragrolle, für einen Schlitten eines Verdeckgestells für einen Planenaufbau, umfassend zwei Kugellagerringe mit Kugeln, zumindest eine innere Lagerschale und eine äußere Lagerschale, die beiden Kugellagerringen zugeordnet ist.

Aus der Praxis wie zum Beispiel der DE 298 07 224 U1, sind Tragrollen bekannt, die ein zweireihiges Kugellager aufweisen, bei denen also zwei Kugellagerringe mit Kugeln von zumindest einer inneren Lagerschale und einer äußeren Lagerschale, die beiden Kugellagerringen zugeordnet ist, vorgesehen sind. Die Kugellagerringe, zumindest eine innere Lagerschale und eine äußere Lagerschale sind jeweils konzentrisch um eine Rollenachse angeordnet und bilden gemeinsam ein Wälzlager, wobei die zumindest eine innere Lagerschale eine zylindrische Aufnahme für ein Verbindungsglied wie eine Schraube oder dergleichen aufweist, wobei die äußere Lagerschale eine zentrale Umfangsfläche zur radialen Abstützung auf einer Führung umfasst. Ist die Führung nicht als flache Führungsbahn ausgebildet, ist es erforderlich, ein zur Führung komplementäres Umfangsprofil auf die äußere Lagerschale aufzupressen, welches sich nicht nur am Außenumfang der äußeren Lagerschale abstützt, sondern auch an den beiden Stirnseiten der äußeren Lagerschale. Die resultierende Rolle ist recht dick und erfordert daher einen recht großen Abstand der Führung von einem Teil, bezüglich dessen die Rolle beweglich sein soll. Bei den bekannten Rollen werden überdies sogenannte Rillenkugellager verwendet, die im Wesentlichen in der Ebene der Rolle Kräfte übertragen, aber nicht mehr als circa 5% der in der vertikalen Ebene der Rolle übertragenen Kräfte in der hierzu senkrechten axialen Richtung der Rollenachse übertragen können. Damit lassen sich solche Rollen zwar als Tragrollen einsetzen, wenn aber noch Querkräfte übertragen werden sollen, ist die Belastungsgrenze der bekannten Rollen schnell überschritten.

DE 20 2013 005 565 U1 beschreibt eine Planenaufhängvorrichtung, an der eine Tragrolle angeschraubt oder angenietet ist, wobei ein Kugellagerring eine an eine flache Führungsbahn angepasste äußere Lagerschale mit einer inneren Lagerschale nach Art eines Wälzlagers koppelt, wobei die innere Lagerschale über die Stirnseite der äußeren Lagerschale verlängert sein kann, um ein Abstandhalteglied zu bilden. Hierbei wird ein Stift mit einer Gewindebohrung durch eine auf der entgegengesetzten Seite der inneren Lagerschale eingesetzten Schraube an einer Basisplatte der Planenaufhängvorrichtung festgelegt. Nachteilig bei der bekannten Planenaufhängvorrichtung ist, dass die Rollen kaum Kräfte in eine Richtung senkrecht zu der Rollenebene übertragen können.

Es ist die Aufgabe der Erfindung, eine Rolle, insbesondere eine Tragrolle, für einen Schlitten eines Verdeckgestells für einen Planenaufbau anzugeben, die Kräfte in eine Richtung senkrecht zu der Erstreckungsebene der Rolle zuverlässig übertragen kann.

Diese Aufgabe wird erfindungsgemäß durch eine Tragrolle mit den Merkmalen gemäß des unabhängigen Anspruchs gelöst.

Hierdurch wird vorteilhaft eine Tragrolle geschaffen, bei der auf die äußere Lagerschale einwirkende axiale Kräfte, das heißt die eine Komponente in Richtung der Rollenachse aufweisen, über die Kugeln der beiden Kugellagerringe jeweils in die zumindest eine innere Lagerschale eingeleitet werden können, ohne dass die Rolle hierbei zerstört wird. Durch die Auswahl einer schrägen Abstützung nach Art eines Schrägkugellagers wird gegenüber einem konventionellen Rillenkugellager die in axialer Richtung wirksame Aufnahme von Kräften mindestens verdoppelt, vorzugsweise verdreifacht oder vervierfacht. Damit ist die Rolle nicht nur als Tragrolle einsetzbar, sondern kann überdies noch eine Führung in Richtung der Rollenachse ermöglichen, insbesondere dann, wenn die Rolle wie vorstehend dargelegt mit Flanschabschnitten ausgebildet ist.

Zweckmäßigerweise sind die Kugeln beider Kugellagerringe jeweils von einem abgerundeten umlaufenden Bahnbereich an einem Fortsatz der Innenseite der äußeren Lagerschale und der Außenseite der zumindest einen inneren Lagerschale abgestützt. Hierdurch wird eine Übertragung von Kräften über die Kugeln des Kugellagerrings nicht nur in der Ebene des Kugellagerrings ermöglicht, sondern auch mit einer Komponente senkrecht hierzu, da die entsprechenden Kräfte durch die abgerundeten umlaufenden Bahnbereiche eingeleitet beziehungsweise aufgenommen werden.

Zweckmäßigerweise sind hierbei an dem zur Rollenachse weisenden Fortsatz der Innenseite der äußeren Lagerschale umlaufende Bahnbereiche für Kugeln beider Kugellagerringe vorgesehen, sodass an einem Fortsatz beide Kugelringe abgestützt werden können.

Gemäß einem Aspekt der Erfindung ist eine Tragrolle für einen Schlitten eines Verdeckgestells für einen Planenaufbau geschaffen, umfassend zwei Kugellagerringe mit Kugeln, zumindest eine innere Lagerschale, und eine äußere Lagerschale, die beiden Kugellagerringen zugeordnet ist, die jeweils konzentrisch um eine Rollenachse angeordnet sind und ein Wälzlager bilden, wobei die zumindest eine innere Lagerschale eine vorzugsweise zylindrische Aufnahme für ein Verbindungsglied aufweist, und wobei die äußere Lagerschale eine zentrale Umfangsfläche zur radialen Abstützung auf einer Führung umfasst, wobei die äußere Lagerschale die zentrale Umfangsfläche axial umgebende Flanschbereiche aufweist, die radial weiter von der Rollenachse beabstandet sind als die zentrale Umfangsfläche.

Diese Rolle ermöglicht es, mit der zentralen Umfangsfläche nicht nur auf einer flachen Führungsbahn, beispielsweise der Schmalseite eines im Querschnitt rechteckigen Flacheisens, abzurollen, sondern darüber hinaus auch mit den die zentrale Umfangsfläche axial umgebenden Flanschbereichen, die beiderseits der zentralen Umfangsfläche umlaufend vorgesehen sind, die Führungsbahn zwischen sich zu zentrieren und damit ein Abgleiten in Richtung der Rollenachse zu vermeiden. Die Flanschbereiche fassen das die Führungsbahn aufweisende Teil somit vorteilhaft ein und begrenzen damit das Spiel, mit dem die zentrale Umfangsfläche bezüglich der Führungsbahn in Richtung der Rollenachse hin und her gehen kann. Damit ist die Rolle zugleich zu ihrer wesentlichen Aufgabe, nämlich der vertikalen Einleitung von Kräften als Tragrolle, ein Führungselement bezüglich der Führungsbahn, entlang derer die Rolle verlagerbar ist. Die Rolle ist hierbei schmalbauend und weist ein günstiges Verhältnis von Rollenhöhe zu Rollenbreite auf, sodass über die Kugellagerringe erhebliche Kräfte in die Rolle eingeleitet werden können, ohne dass hierfür die Rolle zugleich einen großen Abstand der Führungsbahn von dem Behältnis, entlang dessen die Rolle verlagerbar ist, erfordert.

Vorzugsweise weisen die Flanschbereiche einander abgekehrte Stirnseiten auf, die jeweils mit einer der Stirnseiten der äußeren Lagerschale fluchten. Die Stirnseiten der äußeren Lagerschale sind hierbei in zu der Rollenachse senkrechten Ebenen angeordnet, und die einander abgekehrten Stirnseiten der Flanschbereiche verlängern die Stirnseiten der äußeren Lagerschalen. Hierdurch wird vorteilhaft erreicht, dass die Flanschbereiche, die die äußere Lagerschale in Richtung der Ebene der Rolle verlängern, nicht in axialer Richtung der Rollenachse über die Stirnseiten der äußeren Lagerschalen vorstehen, sodass eine kleinbauende Rolle erreicht wird.

Die einander zugekehrten Stirnseiten der Flanschbereiche weisen einen Winkel zu einer zu der Rollenachse senkrechten Ebene auf, der nach Art von Einfallwinkel und Ausfallwinkel gleich ausgebildet ist, sodass die einander zugekehrten Stirnseiten eine Schräge bilden, die es der Rolle ermöglicht, bei bestimmten Lasten auch mit einer Stirnseite eines der Flanschbereiche auf die Führungsbahn zu gelangen, beispielsweise wenn die Führungsbahn deformiert ist und hierdurch die Rolle angehoben wird. Hierdurch wird zugleich sichergestellt, dass sich die Rolle selbsttätig dahingehend zentriert, dass die zentrale Umfangsfläche auf der Führungsbahn abrollt. Alternativ kann auch eine abgerundete Form der einander zugekehrten Stirnseiten der Flanschbereiche vorgesehen sein.

Zwei die einander zugekehrten Stirnseiten verlängernde Geraden kreuzen sich im Bereich der zumindest einen inneren Lagerschale. Dann ist der gewählte Öffnungswinkel weder zu steil, um einen vertretbaren Übergang zu erreichen noch zu wenig steil, um die Führungsbahn ausreichend zuverlässig zu begrenzen.

Gemäß einer bevorzugten Ausgestaltung ist vorgesehen, dass die Flanschbereiche einstückiger Bestandteil der äußeren Lagerschale sind, sodass der gesamte Umfang der äußeren Lagerschale zugleich das Profil der Rolle darstellt.

Zweckmäßigerweise ist vorgesehen, dass die beiden Flanschbereiche an ihrer breitesten Stelle weniger als 40% der Breite der äußeren Lagerschale ausmachen. Damit ist sichergestellt, dass die zentrale Umfangsfläche zumindest 60% der Breite der äußeren Lagerschale ausmacht und die wesentliche Übertragung von Kräften in der Ebene der Rolle zuverlässig gewährleistet ist. Hierbei ist vorzugsweise weiter vorgesehen, dass die beiden Flanschbereiche an ihrer schmalsten Stelle weniger als zwei Drittel der Breite der breitesten Stelle ausmachen. Hierdurch erreicht man einen günstigen Winkel, der die Rolle auf der Führungsbahn zentriert.

Vorzugsweise ist vorgesehen, dass die beiden Flanschbereiche gegenüber der zentralen Umfangsfläche um eine Strecke, gemessen am Durchmesser, vorstehen, die geringer ist als die Breite der zentralen Umfangsfläche. Vorzugsweise ist dieser radiale Überstand aber größer als die gemeinsame Breite der beiden Flanschbereiche an ihren breitesten Stellen.

Die zentrale Umfangsfläche weist eine kleinere Breite auf als der doppelte Durchmesser einer Kugel der Kugellagerringe. Durch den Einsatz von zwei Kugellagerringen mit entsprechend groß dimensionierten Kugeln wird eine zuverlässige Abrollung und günstige Krafteinleitung in der Ebene der Rolle erreicht.

Die zentrale Umfangsfläche weist vorteilhaft einen Radius zu der Rollenachse auf, der größer ist als die Breite der Lagerschalen. Hierdurch wird eine flache und zugleich stabile Rolle geschaffen, die leicht auf einer Führungsbahn abrollt.

Vorzugsweise ist der Außenumfang der zumindest einen inneren Lagerschale größer als die Breite zumindest der äußeren Lagerschale in Richtung der Rollenachse und zweckmäßigerweise auch der zumindest einen inneren Lagerschale in Richtung der Rollenachse. Hierdurch wird zum einen eine große Aufnahme für das Verbindungsglied geschaffen, zum anderen können große Kugeln für die Kugelringe vorgesehen werden.

Vorzugsweise ist die äußere Lagerschale rotationssymmetrisch bezüglich der Rollenachse ausgebildet. Hierdurch kann die äußere Lagerschale kostengünstig, beispielsweise als Drehteil, hergestellt werden. Die äußere Lagerschale ist überdies zweckmäßigerweise spiegelsymmetrisch bezüglich einer zu der Rollenachse senkrechten Ebene, sodass es dahinstehen kann, welche Seite der äußeren Lagerschale als Außenseite und welche als Innenseite der Rolle später eingesetzt wird.

Der Durchmesser der Kugeln der Kugellagerringe ist vorzugsweise größer als die radiale Stärke der zumindest einen inneren Lagerschale. Hierdurch werden gute Abrollbedingungen der Kugeln erreicht, wobei zugleich die zumindest eine innere Lagerschale dünnwandig ausgebildet ist und eine große Aufnahme freigibt. Zugleich wird vorteilhaft erreicht, dass die zumindest eine innere Lagerschale eine geringe Masse aufweist.

Gemäß einer bevorzugten Ausgestaltung ist vorgesehen, dass die Dicke der zumindest einen inneren Lagerschale um eine Stärke einer Unterlegscheibe größer ist als die Dicke der äußeren Lagerschale. Hierdurch wird zunächst vorteilhaft erreicht, dass ein als Niet ausgebildetes Verbindungsglied auf dem Vorsprung der zumindest einen inneren Lagerschale, der nur auf einer Seite der Rolle vorsteht, beispielsweise vernietet werden kann. Weiter kann ein besonders einfach aufgebautes Verbindungsglied eingesetzt werden.

Es ist möglich, dass die Aufnahme eine Einsenkung zur Aufnahme eines Kopfteils des Verbindungsglieds aufweist, um hierdurch insbesondere zu erreichen, dass das Verbindungsglied in der Aufnahme nicht gegen die zumindest eine innere Lagerschale dreht.

Besonders bevorzugt ist eine Rolle dann, wenn die minimale radiale Stärke der äußeren Lagerschale größer ist als die maximale radiale Stärke der zumindest einen inneren Lagerschale. Hierdurch können recht große Kräfte in die äußere Lagerschale eingeleitet werden.

Zweckmäßigerweise ist vorgesehen, dass das Verbindungsglied ein Niet oder ein Gewindebolzen ist, dessen Kopf sich zumindest teilweise an einer Stirnseite der zumindest einen inneren Lagerschale abstützt. Es ist möglich, dass der Gewindebolzen eine zentrale Aussparung aufweist, die mit einem Innengewinde versehen ist, sodass in die Aussparung ein weiterer Gewindebolzen eingeschraubt werden kann.

Besonders günstig ist eine Ausgestaltung der Rolle, bei der zwei innere Lagerschalen vorgesehen sind, die jeweils zu entgegengesetzten Seiten in die äußere Lagerschale eingepresst werden. Hierdurch wird ein besonders einfacher Aufbau und zugleich zuverlässiger Lauf der Rolle erreicht.

Die benachbarten Kugeln der benachbarten Kugellagerringe sind zweckmäßig praktisch spielfrei in Richtung der Rollenachse beabstandet, sodass ein geringes Rollenspiel entsteht und überdies in Richtung der Rollenachse wirkende Kräfte, die in die äußere Lagerschale eingeleitet werden, ohne Torsion des Kugellagerrings durch die zumindest eine innere Lagerschale abgestützt werden.

Eine besonders günstige Rollenkonfiguration wird dadurch erreicht, dass die Höhe der Rolle etwa das dreifache der Dicke der äußeren Lagerschale, und damit in etwa der Dicke der Rolle, beträgt. Hierdurch kann die schmalbauende Rolle und die sie führende Führungsbahn nahe an ein Behältnis, entlang dessen die Rolle verlagerbar sein soll, angeordnet werden.

Weitere Eigenschaften, Weiterbildungen und Vorteile der Erfindung ergeben sich aus den nachfolgenden Beschreibungen eines bevorzugten Ausführungsbeispiels sowie aus den abhängigen Ansprüchen.

Die Erfindung wird nachstehend unter Bezugnahme auf die anliegenden Zeichnungen anhand eines bevorzugten Ausführungsbeispiels näher erläutert.

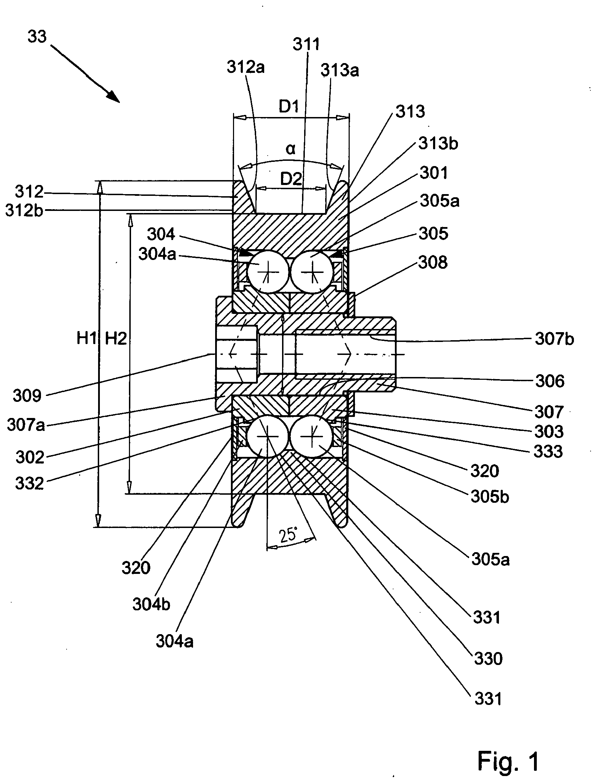

Fig. 1 zeigt einen Querschnitt durch ein bevorzugtes Ausführungsbeispiel einer erfindungsgemäßen Rolle.

Fig. 1 zeigt einen Querschnitt durch eine als Tragrolle 33 ausgebildete Rolle für einen Schlitten eines Verdeckgestells für einen Planenaufbau. Die Tragrolle 33 ist als Wälzlager um eine Rollenachse 309 ausgebildet, und weist eine die Breite der Rolle 33 überspannende äußere Lagerschale 301 auf, ferner zwei innere Lagerschalen, nämlich eine zu einer Außenseite weisende innere Lagerschale 302 und eine zu einer Innenseite weisende innere Lagerschale 303. Zwischen der äußeren Lagerschale 301 und den inneren Lagerschalen 302, 303 sind zwei Kugelringe, nämlich ein nach außen weisender Kugelring 304 und ein nach innen weisender Kugelring 305, angeordnet. Von dem Kugelring 304 sind zwei Kugeln 304a sowie ein die Kugeln 304a auf Abstand haltender Abstandhalter 304b gezeigt, von dem Kugelring 305 zwei Kugeln 305a und ein Abstandhalter 305b. Die beiden inneren Lagerschalen 302, 303 sind nebeneinander angeordnet und innen in die äußere Lagerschale 301 eingepresst, so dass die Breite der beiden inneren Lagerschalen 302, 303 gleich der Breite der äußeren Lagerschale 301 ist. Die beiden inneren Lagerschalen 302, 303 bilden eine gemeinsame innere Lagerschalenanordnung.

Die beiden inneren Lagerschalen 302, 303 definieren im Bereich der Rollenachse 309 eine zylindrische Aufnahme 306, in die ein gestufter Bolzen 307 eingesetzt ist, dessen Kopf 307a sich auf der nach außen weisenden Stirnseite der nach außen weisenden inneren Lagerschale 302 abstützt. Auf der nach innen weisenden Stirnseite der nach innen weisenden inneren Lagerrschale 303 ist weiter eine Belagscheibe 308 angeordnet, die auch einstückig mit der nach innen weisenden inneren Lagerschale 303 ausgebildet sein kann. Der Bolzen 307 weist an seinem dem Kopf 307a abgekehrten Ende eine zentrale Sacklochbohrung 307b auf, die mit einem Innengewinde versehen ist, in das ein Bolzen zum Anschließen der Rolle 33 an ein Tragteil, insbesondere an ein Tragteil eines Schlittens, eingeschraubt werden kann. Die inneren Lagerschalen 302, 303, die Kugelringe 304, 305, und die äußere Lagerschale 301 sind konzentrisch um die Rollenachse 309 angeordnet, die zugleich die Zylinderachse der Aufnahme 306 bildet.

Der radiale Umfang der äußeren Lagerschale 301 weist eine zentrale Umfangsfläche 311 auf, die zur radialen Abstützung der Rolle 33 auf einer nicht dargestellten Führung dient. Beiderseits der zentralen Umfangsfläche 311 umfasst die äußere Lagerschale 301 einstückig mit der äußeren Lagerschale 301 ausgebildete, die zentrale Umfangsfläche 311 axial also in Richtung der Rollenachse 309, umgebende Flanschbereiche 312, 313 auf, die radial weiter von der Rollenachse 309 beabstandet sind als die zentrale Umfangsfläche 311, sodass die zentrale Umfangsfläche 311 und die einander zugekehrten Stirnseiten 312a, 313a der Flanschbereiche 312, 313 einen Bereich der Führung von drei Seiten einschließen. Man erkennt, dass die beiden einander zugekehrten Stirnseiten 312a, 313a einen Winkel zu einer zu der Rollenachse senkrechten Ebene, beispielsweise die Halbierende zwischen den beiden Kugelringen 304, 305, einnehmen, und gemeinsam einen Öffnungswinkel α definieren, der zwischen 30° und 50° liegt und vorliegend ungefähr 40° ausmacht. Durch den gewählten Öffnungswinkel α kreuzen sich die beiden einander zugekehrten Stirnseiten 312a, 313a der Flanschbereiche 312, 313 verlängernden Geraden in einem Punkt, der von der Rollenachse 309 beabstandet ist und etwa in dem von den beiden inneren Lagerschalen 302, 303 eingenommenen Bereich liegt. Die einander abgekehrten Stirnseiten 312b, 313b der Flanschbereiche 312, 313 fluchten jeweils mit einer der Stirnseiten der äußeren Lagerschale 301. Hierdurch wird vorteilhaft erreicht, dass die Flanschbereiche 312, 313, die dazu vorgesehen sind, die Führungsbahn, entlang derer die zentrale Umfangsfläche 311 abrollt, auch seitlich zu umfassen, nicht zu einer größeren Breite der Rolle 33 führen.

Man erkennt, dass der Abstand der einander abgekehrten Stirnseiten 312b, 313b der Flanschbereiche 312, 313, der mit der Breite der beiden inneren Lageringe 302, 303 zusammenfällt, zugleich die Breite D1 der Rolle 33 definiert, die beispielsweise 14 mm beträgt. Der Abstand der beiden Flanschbereiche 312, 313 voneinander, der zugleich die Breite D2 der zentralen Umfangsfläche 311 der äußeren Lagerschale 301 bildet, ist so bemessen, dass die Breite D2 der zentralen Umfangsfläche 311 größer ist als die Summe der Breiten der beiden Flanschbereiche 312, 313, und vorliegend etwa 8,5 mm beträgt.

Man erkennt weiter, dass der maximale Durchmesser der Flanschbereiche 312, 313, der zugleich die Höhe H1 der Rolle 33 definiert, das dreifache der Breite D1 ausmacht und circa 42mm beträgt. Der Durchmesser der zentralen Umfangsfläche 311 ist als Maß H2 erkennbar und beträgt 34 mm, sodass der radiale Überstand der Flanschbereiche 312, 313 sich zu 8 mm ergibt und damit nur geringfügig kleiner ist als die Breite D2 der zentralen Umfangsfläche 311.

Man erkennt weiterhin, dass die Spitzen der Flanschbereiche 312, 313 abgerundet sind und einen kleinen Radius aufweisen. Hierdurch wird Beschädigungen der Führungsbahn im Falle des Aushebens der Tragrolle 33 von der Führungsbahn Rechnung getragen.

Die beiden Stirnseiten der inneren Lagerschalen 302, 303 und der äußeren Lagerschale 301 sind durch ein die Kugelringe 304, 305 verbergendes Abdeckteil 320 verschlossen, das das Eindringen von Feuchtigkeit und Verunreinigungen verhindert.

Man erkennt ferner, dass der Außendurchmesser des Gewindebolzens 307 dem Innendurchmesser der Aufnahme 306 entspricht und 10 mm beträgt.

Schließlich erkennt man, dass die Kugeln 304a, 305a von der inneren Lagerschale 302, 303 und der äußeren Lagerrschale 301 nicht nur in der Ebene der Rolle 33 abgestützt sind, sondern auch durch abgerundete umlaufende Bahnbereiche 331 auf der Innenseite der äußeren Lagerschale, die mittig an der Innenseite der äußeren Lagerschale 301 an einen gemeinsamen Fortsatz 330 angeordnet sind. Auch die äußeren Lagerschalen 302, 303 weisen abgerundete umlaufende Bahnbereiche 332, 333 auf, die bezüglich der Mittelpunkte der Kugeln 304a, 305a diametral gegenüberliegend den Bahnbereichen 331 angeordnet sind und damit die Kugeln 304a, 305a der Kugelringe 304, 305 nach Art eines Schrägkugellagers auch in Richtung der Rollenachse 309 abstützen.

Die vorstehend beschriebene Rolle 33 ermöglicht insbesondere die Aufnahme von zur Ebene der Rolle 33 senkrechten Kräften, die beispielweise dadurch entstehen, dass nicht nur die zentrale Umfangsfläche 311 entlang einer Führungsbahn abrollt, sondern auch die Flanschbereiche 312, 313 gegen seitliche Begrenzungen der Führungsbahn gedrückt werden und damit axiale Kräfte aufnehmen müssen.

## Patentansprüche

1. Tragrolle für einen Schlitten eines Verdeckgestells für einen Planenaufbau, umfassend
zwei Kugellagerringe (304, 305) mit Kugeln (304a, 305a), zumindest eine innere Lagerschale (302, 303), und
eine äußere Lagerschale (301), die beiden Kugellagerringen (304, 305) zugeordnet ist,
die jeweils konzentrisch um eine Rollenachse (309) angeordnet sind und ein Wälzlager bilden,
wobei die zumindest eine innere Lagerschale (302, 303) eine vorzugsweise zylindrische Aufnahme (306) für ein Verbindungsglied (307) aufweist, und
wobei die äußere Lagerschale (301) eine zentrale Umfangsfläche (311) zur radialen Abstützung auf einer Führung umfasst,
wobei die Lagerschalen (301; 302, 303) die Kugeln (304a, 305a) jedes der beiden Kugellagerringe (304, 305) schräg nach Art eines Schrägkugellagers abstützen,
wobei die äußere Lagerschale (301) die zentrale Umfangsfläche (311) axial umgebende Flanschbereiche (312, 313) aufweist, die radial weiter von der Rollenachse (309) fort reichen als die zentrale Umfangsfläche (311),
wobei die Flanschbereiche (312, 313) einander zugekehrte Stirnseiten (312a, 313a) aufweisen, die einen Winkel (α) zueinander und einen weiteren Winkel zu einer zu der Rollenachse (309) senkrechten Ebene aufweisen,
**dadurch gekennzeichnet,**
**dass** die einander zugekehrten Stirnseiten (312a, 313a) verlängernden Geraden sich in der zumindest einen inneren Lagerschale (302, 303) kreuzen, und
**dass** die zentrale Umfangsfläche (311) eine kleinere Breite aufweist als der doppelte Durchmesser einer Kugel (304a, 305a) der Kugellagerringe (304, 305).

2. Tragrolle nach Anspruch 1, **dadurch gekennzeichnet, dass** die Kugeln (304a, 305a) beider Kugellagerringe (304, 305) jeweils von einem abgerundeten umlaufenden Bahnbereich (331; 332, 333) an einem Fortsatz (330) einer Innenseite der äußeren Lagerschale (301) und einer Außenseite der zumindest einen inneren Lagerschale (302, 303) abgestützt sind.

3. Tragrolle nach Anspruch 2, **dadurch gekennzeichnet, dass** an dem zur Rollenachse (309) weisenden Fortsatz (330) der Innenseite der äußeren Lagerschale (301) umlaufende Bahnbereiche (331) für Kugeln (304a, 305a) beider Kugellagerringe (304, 305) vorgesehen sind.

4. Tragrolle nach einem der Ansprüche 1 bis 3, **dadurch gekennzeichnet, dass** die Flanschbereiche (312, 313) einander abgekehrte Stirnseiten (312b, 313b) aufweisen, die jeweils mit einer der Stirnseiten der äußeren Lagerschale (301) fluchten, und dass die Flanschbereiche (312, 313) einstückiger Bestandteil der äußeren Lagerschale (301) sind.

5. Tragrolle nach einem der Ansprüche 1 bis 4, **dadurch gekennzeichnet, dass** die beiden Flanschbereiche (312, 313) an ihrer breitesten Stelle weniger als 40 % der Breite des äußeren Lagerschale (301) ausmachen, und dass die beiden Flanschbereiche (312, 313) an ihrer schmalsten Stelle weniger als zwei Drittel der Breite ihrer breitesten Stelle ausmachen, und dass die beiden Flanschbereiche (312, 313) gegenüber der zentralen Umfangsfläche (311) um eine Strecke vorstehen, die geringer als die Breite der zentralen Umfangsfläche (311) und größer als die Breite der beiden Flanschbereiche (312, 313) an ihrer breitesten Stelle ist.

6. Tragrolle nach einem der vorhergehenden Ansprüche, **dadurch gekennzeichnet, dass** eine Dicke der zumindest einen inneren Lagerschale (302, 303) größer ist als eine Dicke der äußeren Lagerschale (301), jeweils in Richtung parallel zu der Rollenachse, und dass die zentrale Umfangsfläche (311) einen Radius zu der Rollenachse (309) aufweist, der größer ist als die Breite der Lagerschalen (301; 302, 303).

7. Tragrolle nach einem der vorhergehenden Ansprüche, **dadurch gekennzeichnet, dass** die äußere Lagerschale (301) rotationssymmetrisch bezüglich der Rollenachse (309) ist, und dass die äußere Lagerschale (301) spiegelsymmetrisch bezüglich einer zu der Rollenachse (309) senkrechten Ebene ist.

8. Tragrolle nach einem der vorhergehenden Ansprüche, **dadurch gekennzeichnet, dass** der Durchmesser der Kugeln (304a, 305a) der Kugellagerringe (304, 305) größer ist als die radiale Stärke der zumindest einen inneren Lagerschale (302, 303), und dass benachbarte Kugeln (304a, 305a) der Kugellagerringe (304, 305) praktisch spielfrei in Richtung parallel zu der Rollenachse (309) beabstandet sind.

9. Tragrolle nach einem der vorhergehenden Ansprüche, **dadurch gekennzeichnet, dass** die Breite der zumindest einen inneren Lagerschale (302, 303) um ein Maß, das einer Dicke einer Unterlegscheibe entspricht, größer ist als die Breite der äußeren Lagerschale (301).

10. Tragrolle nach einem der vorhergehenden Ansprüche, **dadurch gekennzeichnet, dass** die Aufnahme (306) eine Einsenkung zur Aufnahme eines Kopfteils eines Verbindungsglieds (307) aufweist, und dass das Verbindungsglied (307) ein Niet oder ein Gewindebolzen ist, dessen Kopf (307a) sich zumindest teilweise an einer Stirnseite der zumindest einen inneren Lagerschale (302) abstützt.

11. Tragrolle nach einem der vorhergehenden Ansprüche, **dadurch gekennzeichnet, dass** die minimale radiale Stärke der äußeren Lagerschale (301) größer ist als die maximale radiale Stärke der zumindest einen inneren Lagerschale (302, 303).

12. Tragrolle nach einem der vorhergehenden Ansprüche, **dadurch gekennzeichnet, dass** zwei innere Lagerschalen (302, 303) vorgesehen sind, die jeweils von entgegengesetzten Seiten in die äußere Lagerschale (301) angeordnet werden.

13. Tragrolle nach einem der vorhergehenden Ansprüche, **dadurch gekennzeichnet, dass** die Höhe der Rolle (33) das Dreifache der Dicke der äußeren Lagerschale (301) beträgt.

14. Tragrolle nach einem der vorhergehenden Ansprüche, **dadurch gekennzeichnet, dass** die die einander zugekehrten Stirnseiten (312a, 313a) verlängernden Geraden sich außerhalb der Aufnahme (306) kreuzen.

15. Verdeckgestell für einen Planenaufbau, enthaltend eine Tragrolle nach einem der vorhergehenden Ansprüche als Tragrolle an einem Schlitten.

## Claims

1. A support roller for a carriage of a top frame for a tarpaulin structure, comprising
two ball bearing rings (304, 305) with balls (304a, 305a),
at least one inner bearing shell (302, 303), and
an outer bearing shell (301) which is assigned to both ball bearing rings (304, 305),
which are each arranged concentrically about a roller axis (309) and form a rolling bearing,
wherein the at least one inner bearing shell (302, 303) has a preferably cylindrical receptacle (306) for a connecting member (307), and
wherein the outer bearing shell (301) comprises a central circumferential surface (311) for radial support on a guide, wherein the bearing shells (301; 302, 303) support the balls (304a, 305a) of each of the two ball bearing rings (304, 305) obliquely in the manner of an angular-contact ball bearing,
wherein the outer bearing shell (301) has flange regions (312, 313) which axially surround the central circumferential surface (311) and which reach radially further away from the roller axis (309) than the central circumferential surface (311),
wherein the flange regions (312, 313) have end sides (312a, 313a) which are turned towards one another and which have an angle (α) relative to one another and a further angle relative to a plane perpendicular to the roller axis (309),
**characterized in**
**that** straight lines forming extensions of the end sides (312a, 313a) which are turned towards one another intersect in the at least one inner bearing shell (302, 303), and
**that** the central circumferential surface (311) has a width smaller than double the diameter of a ball (304a, 305a) of the ball bearing rings (304, 305).

2. The support roller according to claim 1, **characterized in that** the balls (304a, 305a) of the two ball bearing rings (304, 305) are supported in each case by a rounded peripheral track region (331; 332, 333) on a projection (330) of an inner side of the outer bearing shell (301) and of an outer side of the at least one inner bearing shell (302, 303).

3. The support roller according to claim 2, **characterized in that**, on the projection (330) of the inner side of the outer bearing shell (301), said projection pointing towards the roller axis (309), peripheral track regions (331) for balls (304a, 305a) of the two ball bearing rings (304, 305) are provided.

4. The support roller according to one of claims 1 to 3, **characterized in that** the flange regions (312, 313) have end sides (312b, 313b) which are turned away from one another and which are flush in each case with one of the end sides of the outer bearing shell (301), and **in that** the flange regions (312, 313) are an integral constituent part of the outer bearing shell (301).

5. The support roller according to one of claims 1 to 4, **characterized in that** the two flange regions (312, 313), at their widest point, make up less than 40% of the width of the outer bearing shell (301), and that the two flange regions (312, 313), at their narrowest point, make up less than two thirds of the width of their widest point, and that the two flange regions (312, 313) protrude in relation to the central circumferential surface (311) by a distance which is smaller than the width of the central circumferential surface (311) and greater than the width of the two flange regions (312, 313) at their widest point.

6. The support roller according to one of the preceding claims, **characterized in that** a thickness of the at least one inner bearing shell (302, 303) is greater than a thickness of the outer bearing shell (301), in each case in a direction parallel to the roller axis, and that the central circumferential surface (311) has a radius with respect to the roller axis (309), said radius being greater than the width of the bearing shells (301; 302, 303).

7. The support roller according to one of the preceding claims, **characterized in that** the outer bearing shell (301) is rotationally symmetrical with respect to the roller axis (309), and that the outer bearing shell (301) is mirror symmetrical with respect to a plane perpendicular to the roller axis (309).

8. The support roller according to one of the preceding claims, **characterized in that** the diameter of the balls (304a, 305a) of the ball bearing rings (304, 305) is greater than the radial thickness of the at least one inner bearing shell (302, 303), and that adjacent balls (304a, 305a) of the ball bearing rings (304, 305) are spaced apart in a practically play-free manner in a direction parallel to the roller axis (309).

9. The support roller according to one of the preceding claims, **characterized in that** the width of the at least one inner bearing shell (302, 303) is greater than the width of the outer bearing shell (301) by an extent which corresponds to a thickness of a washer.

10. The support roller according to one of the preceding claims, **characterized in that** the receptacle (306) has a depression for receiving a head part of a connecting member (307), and that the connecting member (307) is a rivet or a threaded bolt whose head (307a) is supported at least partially on an end side of the at least one inner bearing shell (302).

11. The support roller according to one of the preceding claims, **characterized in that** the minimum radial thickness of the outer bearing shell (301) is greater than the maximum radial thickness of the at least one inner bearing shell (302, 303).

12. The support roller according to one of the preceding claims, **characterized in that** two inner bearing shells (302, 303) are provided, which are each arranged from opposite sides into the outer bearing shell (301).

13. The support roller according to one of the preceding claims, **characterized in that** the height of the roller (33) is three times the thickness of the outer bearing shell (301).

14. The support roller according to one of the preceding claims, **characterized in that** the straight lines forming extensions of the end sides (312a, 313a) which are turned towards one another intersect outside of the receptacle (306).

15. A top frame for a tarpaulin structure, containing a support roller according to one of the preceding claims as support roller on a carriage.

## Revendications

1. Galet de support destiné à un chariot d'un cadre de recouvrement d'une structure de bâche, ledit galet de support comprenant
deux bagues de palier à billes (304, 305) munies de billes (304a, 305a),
au moins une coquille de palier intérieure (302, 303), et
une coquille de palier extérieure (301) qui est associée aux deux bagues de palier à billes (304, 305),
lesquelles coquilles sont chacune disposées concentriquement autour d'un axe de galet (309) et forment un palier de roulement,
l'au moins une coquille de palier intérieure (302, 303) comportant un logement (306) de préférence cylindrique destiné à un élément de liaison (307), et
la coquille de palier extérieure (301) comportant une surface circonférentielle centrale (311) destinée à venir radialement en appui sur un guide,
les coquilles de palier (301 ; 302, 303) supportant les billes (304a, 305a) de chacune des deux bagues de palier à billes (304, 305) obliquement à la manière d'un palier à billes à portée oblique,
la coquille de palier extérieure (301) comportant des zones de rebord (312, 313) qui entourent axialement la surface circonférentielle centrale (311) et qui s'étendent radialement plus loin de l'axe de galet (309) que la surface circonférentielle centrale (311),
les zones de rebord (312, 313) comportant des faces d'extrémité (312a, 313a) qui se font face et qui forment un angle (α) l'une par rapport à l'autre et un autre angle par rapport à un plan perpendiculaire à l'axe de galet (309),
**caractérisé en ce**
**que** des droites qui prolongent les faces d'extrémité (312a, 313a) qui se font face se coupent dans l'au moins une coque de palier intérieure (302, 303), et
**que** la surface circonférentielle centrale (311) a une largeur qui est inférieure à deux fois le diamètre d'une bille (304a, 305a) des bagues de palier à billes (304, 305).

2. Galet de support selon la revendication 1, **caractérisé en ce que** les billes (304a, 305a) des deux bagues de palier à billes (304, 305) sont chacune supportées par une zone formant piste circonférentielle arrondie (331 ; 332, 333) au niveau d'un prolongement (330) d'un côté intérieur de la coquille de palier extérieure (301) et d'un côté extérieur de l'au moins une coquille de palier intérieure (302, 303).

3. Galet de support selon la revendication 2, **caractérisé en ce que** des zones formant pistes circonférentielles (331) destinées à des billes (304a, 305a) des deux bagues de palier à billes (304, 305) sont prévues au niveau du prolongement (330), pointant vers l'axe de galet (309), du côté intérieur de la coquille de palier extérieure (301).

4. Galet de support selon l'une des revendications 1 à 3, **caractérisé en ce que** les zones de rebord (312, 313) comportent des faces d'extrémité (312b, 313b) qui sont opposées les unes aux autres et qui sont chacune alignées avec l'une des faces d'extrémité de la coquille de palier extérieure (301), et que les zones de rebord (312, 313) font partie intégrante de la coquille de palier extérieure (301).

5. Galet de support selon l'une des revendications 1 à 4, **caractérisé en ce que** les deux zones de rebord (312, 313) représentent en leur point le plus large moins de 40 % de la largeur de la coquille de palier extérieure (301), et que les deux zones de rebord (312, 313) représentent en leur point le plus étroit moins des deux tiers de la largeur de leur point le plus large, et que les deux zones de rebord (312, 313) font saillie de la surface circonférentielle centrale (311) sur une distance qui est inférieure à la largeur de la surface circonférentielle centrale (311) et qui est supérieure à la largeur des deux zones de rebord (312, 313) à leur point le plus large.

6. Galet de support selon l'une des revendications précédentes, **caractérisé en ce que** l'épaisseur de l'au moins une coquille de palier intérieure (302, 303) est supérieure à l'épaisseur de la coquille de palier extérieure (301), à chaque fois dans la direction parallèle à l'axe de galet, et que la surface circonférentielle centrale (311) a par rapport à l'axe de galet (309) un rayon qui est supérieur à la largeur des coquilles de palier (301 ; 302, 303).

7. Galet de support selon l'une des revendications précédentes, **caractérisé en ce que** la coquille de palier extérieure (301) est à symétrie de révolution par rapport à l'axe de galet (309), et que la coquille de palier extérieure (301) est à symétrique spéculaire par rapport à un plan perpendiculaire à l'axe de galet (309).

8. Galet de support selon l'une des revendications précédentes, **caractérisé en ce que** le diamètre des billes (304a, 305a) des bagues de palier à billes (304, 305) est supérieur à l'épaisseur radiale de la au moins une coquille de palier intérieure (302, 303), et que des billes adjacentes (304a, 305a) des bagues de palier à billes (304, 305) sont espacées pratiquement sans jeu dans la direction parallèle à l'axe de galet (309).

9. Galet de support selon l'une des revendications précédentes, **caractérisé en ce que** la largeur de l'au moins une coquille de palier intérieure (302, 303) est supérieure à la largeur de la coquille de palier extérieure (301) d'une quantité correspondant à l'épaisseur d'une rondelle.

10. Galet de support selon l'une des revendications précédentes, **caractérisé en ce que** le logement (306) comporte un évidement destiné à recevoir une partie de tête d'un élément de liaison (307), et que l'élément de liaison (307) est un rivet ou un boulon fileté dont la tête (307a) vient au moins partiellement en appui sur une face d'extrémité de l'au moins une coquille de palier intérieure (302).

11. Galet de support selon l'une des revendications précédentes, **caractérisé en ce que** l'épaisseur radiale minimale de la coquille de palier extérieure (301) est supérieure à l'épaisseur radiale maximale de l'au moins une coquille de palier intérieure (302, 303).

12. Galet de support selon l'une des revendications précédentes, **caractérisé en ce que** deux coquilles de palier intérieures (302, 303) sont prévues qui sont chacune disposées de manière à s'étendre depuis des côtés opposés jusque dans la coquille de palier extérieure (301).

13. Galet de support selon l'une des revendications précédentes, **caractérisé en ce que** la hauteur du galet (33) est égale à trois fois l'épaisseur de la coquille de pallier extérieure (301).

14. Galet de support selon l'une des revendications précédentes, **caractérisé en ce que** les droites prolongeant les faces d'extrémité (312a, 313a) opposées les unes aux autres se coupent à l'extérieur du logement (306).

15. Cadre de recouvrement destiné à une structure de bâche et contenant un galet de support selon l'une des revendications précédentes servant de galet de support au niveau d'un chariot.
